# EUROPEAN PATENT SPECIFICATION

(11) **EP 1 514 742 B1**
(45) Date of publication and mention of the grant of the patent: **30.08.2006**
(21) Application number: 04016541.7
(22) Date of filing: 14.07.2004
(51) Int. Cl.: B60R 21/16, B60R 21/20

(54) **Airbag and airbag assembly**
Gassack und Gassackvorrichtung
Airbag et dispositif d'airbag

(30) Priority: 09.09.2003 JP 2003317004
(43) Date of publication of application: 16.03.2005
(73) Proprietor: TAKATA CORPORATION, Minato-ku, Tokyo 106-8510 (JP)
(72) Inventor: Abe, Kazuhiro, Tokyo 106-8510 (JP)
(74) Representative: Banzer, Hans-Jörg

(56) References cited:
- PATENT ABSTRACTS OF JAPAN vol. 1997, no. 11, 28 November 1997 (1997-11-28) -& JP 09 175302 A (NIPPON SEIKO KK), 8 July 1997 (1997-07-08)
- PATENT ABSTRACTS OF JAPAN vol. 2003, no. 06, 3 June 2003 (2003-06-03) -& JP 2003 040071 A (TOYODA GOSEI CO LTD), 13 February 2003 (2003-02-13)

## Description

### [Technical Field]

The present invention relates to an airbag mounted to motor vehicles etc. and inflating in the event of emergency such as a crash and an airbag assembly in which a gas generator is combined to the airbag. More specifically, the invention relates to an airbag and an airbag assembly in which a rod-like gas generator is passed through an insertion hole and, more particularly, it relates to an airbag and an airbag assembly suitable for a knee airbag.

### [Background Art]

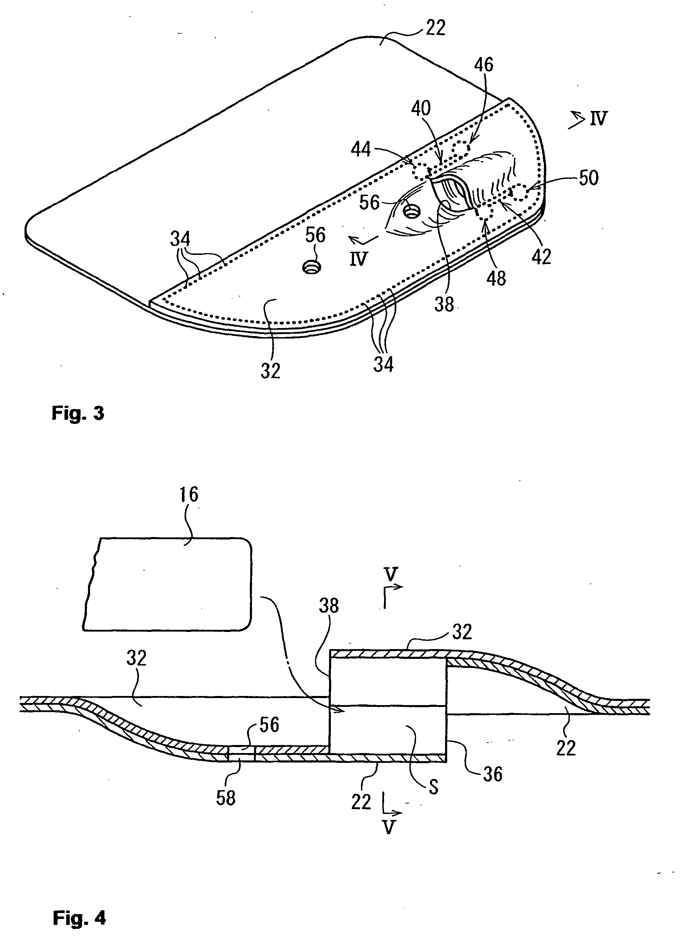

It is described in Japanese Unexamined Patent Application Publication No. 2003-40071 to provide a knee airbag system including an airbag and a rod-like cylindrical gas generator inserted in the insertion hole of the airbag which inflates an airbag in front of the knees of front-seat occupants in a car crash. In this airbag system, as shown in Fig. 3 of the patent, the greater part of the gas generator is housed in the airbag; the rear end of the gas generator projects outward from the insertion hole of the airbag. A lead wire for feeding an ignition current connects to the rear and of the gas generator.

### [Problems to be Solved by the Invention]

In the airbag system disclosed in the Japanese Unexamined Patent Application Publication No. 2003-40071, when the gas generator is in operation, gas is apt to leak from between the inner periphery of the insertion hole of the airbag and the outer periphery of the gas generator. For that reason, it is necessary to use a high-output gas generator.

JP 09 175 302 discloses an airbag according to the preamble of claim 1.

The object of the present invention is to provide an airbag and an airbag assembly in which the gas leakage from the gas-generator insertion hole is further minimized.

### [Means for Solving the Problems]

According to the present invention, this object is achieved by an airbag as defined in claim 1, an airbag assembly as defined in claim 3 and an airbag system as defined in claim 5. The dependent claims define preferred and advantageous embodiments of the invention.

An airbag according to the present invention includes an airbag body and a support sheet mounted to the airbag body. The airbag body and the support sheet each have a gas-generator insertion hole. The insertion holes are disposed separately, wherein the support sheet faces the insertion hole of the airbag body and the airbag body faces the insertion hole of the support sheet. The space between the insertion hole of the airbag body and the insertion hole of the support sheet serves as a gas-generator insertion space.

An airbag assembly according to the invention includes the airbag described above and a gas generator, wherein the gas generator is passed through the insertion holes of the airbag, wherein the distal end of the gas generator is disposed in the airbag; while the rear end of the gas generator is disposed outside the airbag.

According to the invention, a connecting portion for connecting the airbag body and the support sheet together is disposed in the vicinity of the insertion space, and the connecting portion extends in the direction to connect the insertion holes together.

### [Advantages]

In the airbag and the airbag assembly according to the present invention, since the gas generator is passed through both of the insertion hole of the support sheet and the insertion hole of the airbag body, the gas leakage from the insertion hole is less than that of the know-art example in which the gas generator is passes though only one insertion hole. Accordingly, the airbag can be inflated sufficiently early even with a low-output gas generator.

In this embodiment, a connecting portion for connecting the airbag body and the support sheet together is disposed in the vicinity of the insertion space. When the connecting portion extends in the direction to connect the insertion holes with each other, at least part of the gas-generator insertion space between the insertion holes is shaped like a tunnel. Since the gas generator is passed through the tunnel-like space, the gas leakage from the insertion hole is extremely low.

### [Brief Description of the Drawings]

[Fig. 1] Fig. 1 is a cross sectional view of a knee airbag system as an airbag assembly including an airbag according to an embodiment of the present invention.
[Fig. 2] Fig. 2 is an exploded perspective view of the knee airbag of Fig. 1.
[Fig. 3] Fig. 3 is a perspective view of a rear panel having a support sheet.
[Fig. 4] Fig. 4 is a cross sectional view taken along line IV-IV of Fig. 3.
[Fig. 5] Fig. 5 is a cross sectional view taken along line V-V of Fig. 4.
[Fig. 6] Fig. 6 is a plan view of the vicinity of a gas-generator insertion hole of the rear panel with a support sheet.
[Fig. 7] Fig. 7 is an enlarged perspective view of the gas-generator insertion hole.

### [Best Mode for Carrying Out the Invention]

An embodiment of the present invention will be described with reference to the drawings.

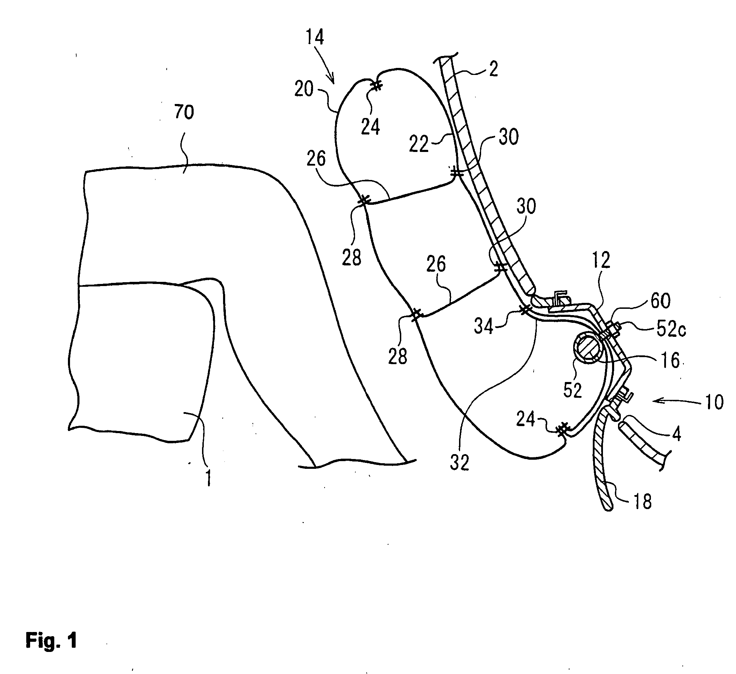

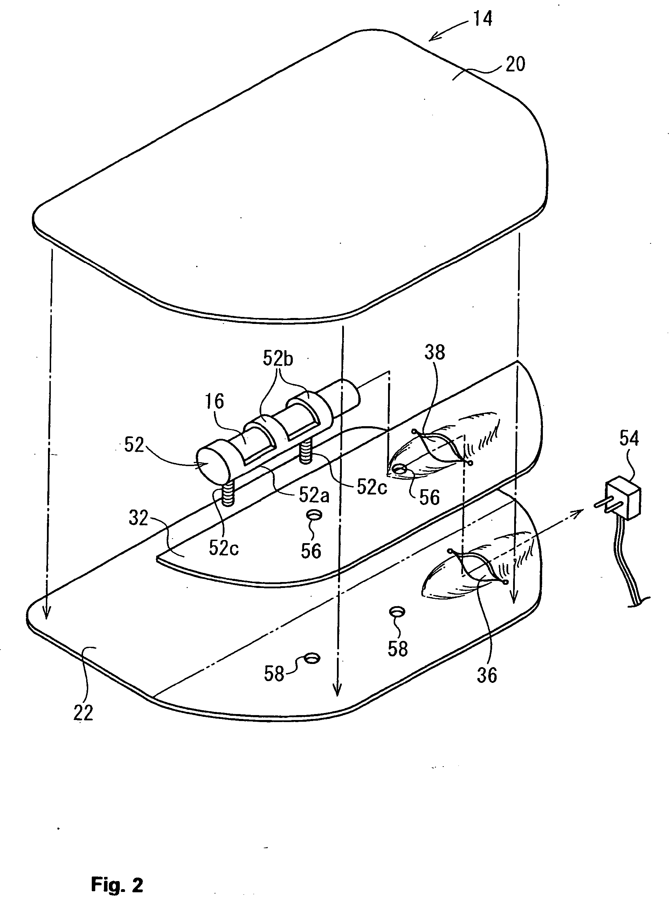

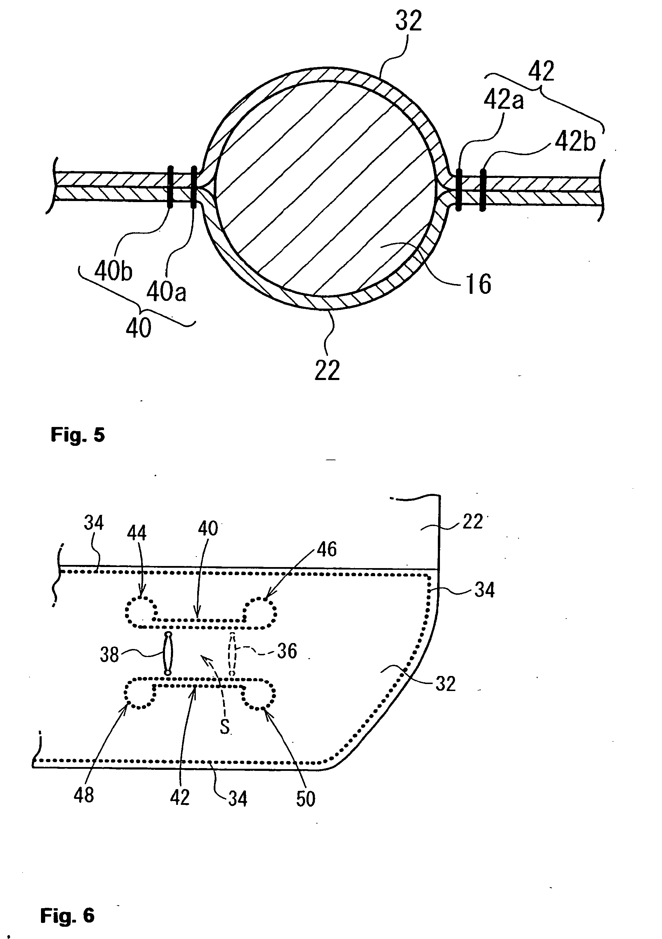

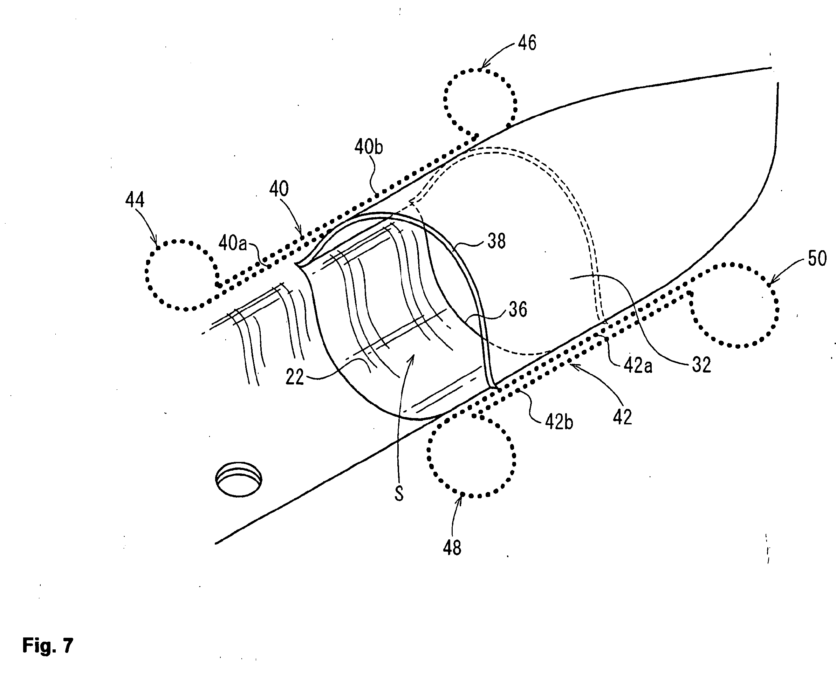

Fig. 1 is a cross sectional view of a knee airbag system (occupant-leg protection system) as an airbag assembly including an airbag according to an embodiment of the present invention; Fig. 2 is an exploded perspective view of the knee airbag; Fig. 3 is a perspective view of a rear panel of an airbag body having a support sheet; Fig. 4 is a cross sectional view taken along line IV-IV of Fig. 3; Fig. 5 is a cross sectional view taken along line V-V of Fig. 4; Fig. 6 is a plan view of the vicinity of a gas-generator insertion hole of the rear panel with the support sheet; and Fig. 7 is an enlarged perspective view of the gas-generator insertion hole.

A knee airbag system 10 is mounted to an interior panel 2 provided in front of a car seat 1.

Referring to Fig. 1, the knee airbag system 10 includes a container-like retainer 12, a knee airbag 14 joined with the interior of the retainer 12, and a gas generator 16 for inflating the knee airbag 14. The retainer 12 is disposed in an opening 4 of the interior panel 2. The knee airbag 14 is normally accommodated in the retainer 12 in folded condition. A lid 18 is mounted to the front of the retainer 12 so as to cover the knee airbag 14. The lid 18 is normally arranged approximately flash with the interior panel 2; when the knee airbag 14 inflates, it deploys to the front side of the interior panel 2 with the lower end as fulcrum.

In this embodiment, the opening 4 is arranged at a height equal to or lower than that of the seat surface of the seat 1. The knee airbag 14 inflates through the opening 4 from below upwards along the front face (the face adjacent to the occupant) of the interior panel 2.

The outer shell (airbag body) of the knee airbag 14 is constructed of a front panel 20 adjacent to an occupant and a rear panel 22 adjacent to the interior panel 2. Referring to Fig. 2, in this embodiment, the front panel 20 and the rear panel 22 are approximately rectangular in shape and in almost equal size. The front panel 20 and the rear panel 22 are joined all around the peripheries into a bag by connecting means such as sewing. Reference numeral 24 denotes a seam made of thread or the like that joins the peripheries together.

Referring to Fig. 1, the knee airbag 14 includes therein tie panels 26 and 26 that join the front panel 20 with the rear panel 22 to restrain the expansion of the front panel 20 toward the occupant during the inflation of the knee airbag 14. Numerals 28 and 30 indicate seams that join the opposite ends of the tie panels 26 with the front panel 20 and the rear panel 22, respectively.

A support sheet 32 is mounted to the inner surface of the lower part of the rear panel 22. Referring to Fig. 2, the support sheet 32 of this embodiment is an approximately rectangular sheet that is smaller than the rear panel 22 in vertical size and almost equal in lateral size. The support sheet 32 is disposed along the inner surface of the rear panel 22 such that the lower side coincides with the lower side of the rear panel 22 and the left and right sides coincide with the left and right sides of the rear panel 22, respectively, and is joined with the rear panel 22 all around the periphery by sewing or the like. Numeral 34 of Fig. 3 indicates the seam that joins the periphery of the support sheet 32 with the rear panel 22. The lower side and the left and right sides of the support sheet 32 are joined to the rear panel 22 together with the lower side and the left and right sides of the front panel 20, respectively, with the seam 24.

The rear panel 22 and the support sheet 32 have insertion holes 36 and 38 through which the gas generator 16 is passed, respectively. Referring to Fig. 6, the insertion holes 36 and 38 are disposed separately with a lateral space. Accordingly, the support sheet 32 faces (overlaps) the insertion hole 36 of the rear panel 22 and the rear panel 22 faces the insertion hole 38 of the support sheet 32. In this embodiment, the insertion holes 36 and 38 are formed in slit (cut) shape extending vertically. The space between the insertion hole 36 of the rear panel 22 and the insertion hole 38 of the support sheet 32 serves as a gas-generator insertion space S.

Referring to Fig. 6, the rear panel 22 and the support sheet 32 are connected by sewing or the like in the upper and lower vicinities of the gas-generator insertion space S. Reference numerals 40 and 42 indicate connecting portions (seams). The connecting portion 40 in the upper vicinity of the gas-generator insertion space S extends linearly to connect the upper rims of the insertion holes 36 and 38; the connecting portion 42 in the lower vicinity of the gas-generator insertion space S extends linearly to connect the lower rims of the insertion holes 36 and 38. As shown on an enlarged scale in Fig. 7, the gas-generator insertion space S is surrounded by the rear panel 22 and the support sheet 32 and is shaped like a tunnel whose opposite ends communicate with the insertion holes 36 and 38, respectively.

Referring to Figs. 5 and 7, the linear connecting portion 40 of this embodiment is made of a pair of seams 40a and 40b extending in parallel with each other; the linear connecting portion 42 is also made of a pair of seams 42a and 42b extending in parallel with each other. The linear connecting portions 40 and 42 have circular connecting portions 44, 46, 48, and 50 on opposite sides, each connecting the rear panel 22 and the support sheet 32 together by sewing or the like. The opposite ends of the seams 40a and 40b connect with the circular connecting portions 44 and 46, respectively; the opposite ends of the seams 42a and 42b connect with the circular connecting portions 48 and 50, respectively.

The gas generator 16 is shaped like a rod (column) and has a gas port in the side circumference at one end (distal end). The gas generator 16 accommodates a gas-generating agent in a cylindrical pressure-tight casing and has an ignition squib (not shown) at the other end (rear end).

The gas generator 16 mounts a fixing member 52. Referring to Fig. 2, the fixing member 52 includes a body 52a arranged along the side circumference of the back of the gas generator 16 (the side facing the support sheet 32), an arch section 52b placed over the body 52a, and a stud bolt 52c projecting from the back of the body 52a. The gas generator 16 is mounted to the fixing member 52 such that the distal end is inserted into the arch section 52b. The rear end of the gas generator 16 projects from the fixing member 52.

The great part of the distal end of the gas generator 16 is disposed in the knee airbag 14; the rear end projecting from the fixing member 52 is inserted into the gas-generator insertion space S to be outside the knee airbag 14. Since a band (not shown) etc. is mounted to the rear end of the gas generator 16, the periphery of the gas-generator insertion space S is hermetically fixed to side circumference of the gas generator 16.

A connector 54 for carrying a current from a gas-generator control unit (not shown) to the squib is joined with the rear end of the gas generator 16 which is arranged outside the knee airbag 14.

The support sheet 32 and the rear panel 22 located on the back of the gas generator 16 have bolt-insertion holes 56 and 58 for the stud bolt 52c projecting from the fixing member 52 to pass through, respectively. In this embodiment, as shown in Fig. 2, the two stud bolts 52c project from the fixing member 52 and so the support sheet 32 has two bolt-insertion holes 56 and the rear panel 22 has two bolt-insertion holes 58. The stud bolts 52c are each inserted into the bolt-insertion holes 56 and 58 and project outward from the knee airbag 14.

Also the bottom of the retainer 12 has bolt-insertion holes (their reference numerals are omitted) for the stud bolts 52c to pass through at the positions that coincide with the bolt-insertion holes 56 and 58. Referring back to Fig. 1, each stud bolt 52c is passed through the bolt-insertion hole and projects to the back of the retainer 12, to which a nut 60 is tightened and as such, the fixing member 52 is fixed to the retainer 12 and the rear panel 22 and the support sheet 32 of the knee airbag 14 are clamped between the fixing member 52 and the retainer 12.

In the knee airbag system 10 with such a structure, when a car crash is sensed, the squib of the gas generator 16 is energized to activate the gas generator 16, thus feeding gas into the knee airbag 14. The knee airbag 14 starts to inflate with the gas, pushing open the lid 18 to deploy so as to cover the front face of the interior panel 2, as shown in Fig. 1. The inflated knee airbag 14 prevents the legs 70 of an occupant in the seat 1 from colliding with the interior panel 2.

In the knee airbag system 10, the rear panel 22 of the knee airbag 14 and the support sheet 32 mounted to the rear panel 22 have the gas-generator insertion holes 36 and 38, respectively, with a lateral distance from each other. Since the rear end of the gas generator 16 is passed through both of the insertion holes 36 and 38, gas hardly flows out from the knee airbag 14 through the insertion holes 36 and 38, as compared with the known-art airbag in which the gas generator is passed though only one insertion hole.

In this embodiment, moreover, the gas-generator insertion space S between the insertion holes 36 and 38 is shaped like a tunnel, so that the gas communication resistance between the inner circumference of the gas-generator insertion space S and the outer circumference of the gas generator 16 is high; thus, the amount of the gas flowing from the knee airbag 14 through the insertion holes 36 and 38 is extremely small.

The knee airbag 14 can thus be inflated sufficiently early even with a low-output gas generator 16.

The above-described embodiment is only an example of the invention; the invention is not limited to that.

For example, although the support sheet 32 of the foregoing embodiment is as large as to cover the entire inner surface of the lower part of the rear panel 22, it may be the size that can form the tunnel-shaped gas-generator insertion space S.

The foregoing embodiment is an example of the present invention applied to the knee airbag system which is a occupant leg protection system; the invention can be applied to other airbag systems (airbag assemblies).

## Claims

1. An airbag comprising an airbag body and a support sheet (32) mounted to the airbag body, wherein
the airbag body and the support sheet (32) each have a gas-generator insertion hole (36; 38), wherein
the insertion holes (36; 38) are disposed separately, the support sheet (32) facing the insertion hole (36) of the airbag body and the airbag body facing the insertion hole (38) of the support sheet (32), and
the space between the insertion hole (36) of the airbag body and the insertion hole (38) of the support sheet (32) serves as a gas-generator insertion space (S)
**characterized in that**
the rear end of the gas generator is outside the airbag,
connecting portions (40; 42) for connecting the airbag body and the support sheet (32) together are disposed in the vicinity of the insertion space (S), and
the connecting portions (40; 42) extend linearly to connect the upper or lower rims, respectively, of the insertion holes (36; 38) together.

2. An airbag according to Claim 1, wherein
the airbag is a knee airbag (14).

3. An airbag assembly comprising an airbag (14) and a gas generator (16), wherein
the airbag (14) is an airbag according to any one of Claims 1-3.

4. An airbag assembly according to Claim 3, wherein
the gas generator is a rod-like gas generator (16).

5. An airbag system comprising a retainer (12) and an airbag assembly joined with the interior of the retainer (12), wherein
the airbag assembly is an airbag assembly according to Claim 3 or 4.

## Patentansprüche

1. Airbag umfassend einen Airbagkörper und eine Stützschicht (32), welche an dem Airbagkörper angebracht ist, wobei
der Airbagkörper und die Stützschicht (32) jeweils ein Gasgeneratoreinsetzloch (36; 38) aufweisen, wobei
die Einsetzlöcher (36; 38) separat angeordnet sind, wobei die Stützschicht (32) dem Einsetzloch (36) des Airbagkörpers gegenüberliegt und wobei der Airbagkörper dem Einsetzloch (38) der Stützschicht (32) gegenüberliegt, und
der Raum zwischen dem Einsetzloch (36) des Airbagkörpers und dem Einsetzloch (38) der Stützschicht (32) als ein Gasgeneratoreinsetzraum (S) dient,
**dadurch gekennzeichnet,**
**dass** sich das Hinterende des Gasgenerators außerhalb des Airbags befindet,
**dass** Verbindungsabschnitte (40; 42) zum Verbinden des Airbagkörpers und der Stützschicht (32) miteinander in der Umgebung des Einsetzraums (S) angeordnet sind, und
**dass** sich die Verbindungsabschnitte (40; 42) linear erstrecken, um die oberen bzw. unteren Ränder der Einsetzlöcher (36; 38) miteinander zu verbinden.

2. Airbag nach Anspruch 1, wobei der Airbag ein Knieairbag (14) ist.

3. Airbaganordnung, umfassend einen Airbag (14) und einen Gasgenerator (16), wobei der Airbag (14) ein Airbag nach einem der Ansprüche 1-3 ist.

4. Airbaganordnung nach Anspruch 3, wobei der Gasgenerator ein stabartiger Gasgenerator (16) ist.

5. Airbagsystem, umfassend einen Halter (12) und eine Airbaganordnung, welche mit dem Innenbereich des Halters (12) verbunden ist, wobei die Airbaganordnung eine Airbaganordnung nach Anspruch 3 oder 4 ist.

## Revendications

1. Coussin de sécurité gonflable ou airbag, comprenant un corps de coussin de sécurité gonflable et une feuille de support (32) montée sur le corps de coussin de sécurité gonflable, dans lequel:
- le corps de coussin de sécurité gonflable et la feuille de support (32) ont chacun un trou d'insertion (36 ; 38) de générateur de gaz, dans lequel :
- les trous d'insertion (36 ; 38) sont disposés séparément, la feuille de support (32) faisant face au trou d'insertion (36) du corps de coussin de sécurité gonflable et le corps de coussin de sécurité gonflable faisant face au trou d'insertion (38) de la feuille de support (32) ; et
- l'espace entre le trou d'insertion (36) du corps de coussin de sécurité gonflable et le trou d'insertion (38) de la feuille de support (32) sert d'espace d'insertion (S) de générateur de gaz,
**caractérisé en ce que** :
- l'extrémité arrière du générateur de gaz est à l'extérieur du coussin de sécurité gonflable,
- des parties de raccordement (40 ; 42) pour relier le corps de coussin de sécurité gonflable et la feuille de support (32) ensemble sont disposées à proximité de l'espace d'insertion (S), et
- les parties de raccordement (40 ; 42) s'étendent de manière linéaire pour relier les bords supérieur ou inférieur, respectivement, des trous d'insertion (36 ; 38) ensemble.

2. Coussin de sécurité gonflable selon la revendication 1, dans lequel le coussin de sécurité gonflable est un coussin de sécurité gonflable pour genoux (14).

3. Ensemble de coussin de sécurité gonflable, comprenant un coussin de sécurité gonflable (14) et un générateur de gaz (16), dans lequel le coussin de sécurité gonflable (14) est un coussin de sécurité gonflable selon l'une quelconque des revendications 1 à 3.

4. Ensemble de coussin de sécurité gonflable selon la revendication 3, dans lequel le générateur de gaz est un générateur de gaz (16) en forme de barre.

5. Système de coussin de sécurité gonflable, comprenant un organe de retenue (12) et un ensemble de coussin de sécurité gonflable assemblé avec l'intérieur de l'organe de retenue (12), et dans lequel l'ensemble de coussin de sécurité gonflable est un ensemble de coussin de sécurité gonflable selon la revendication 3 ou 4.
